# NEUE EUROPÄISCHE PATENTSCHRIFT

(11) **EP 1 745 217 B2**
(45) Veröffentlichungstag und Bekanntmachung des Hinweises auf die Entscheidung über den Einspruch: **15.04.2020**
(45) Hinweis auf die Patenterteilung: 11.04.2012
(21) Anmeldenummer: 05706754.8
(22) Anmeldetag: 09.02.2005
(51) Int. Cl.: F16B 47/00

(54) **UNTERDRUCK-HALTEVORRICHTUNG**
SUCTION-TYPE HOLDING DEVICE
DISPOSITIF DE MAINTIEN PAR SUCCION

(30) Priorität: 03.05.2004 DE 102004022038
(43) Veröffentlichungstag der Anmeldung: 24.01.2007
(73) Patentinhaber: Schmidt, Patrick, 21218 Seevetal (DE)
(72) Erfinder: RISTAU, Harald, 21438 Brackel (DE)
(74) Vertreter: Müller Schupfner & Partner Patent- und Rechtsanwaltspartnerschaft mbB
(86) Internationale Anmeldenummer: PCT/DE2005/000214
(87) Internationale Veröffentlichungsnummer: WO 2005/106262

(56) Entgegenhaltungen:
- EP-A1- 1 532 891
- DE-A1- 3 147 293
- DE-B- 1 074 237
- DE-B- 2 124 511
- FR-A1- 2 672 651
- GB-A- 437 381
- GB-A- 491 991
- GB-A- 1 084 559
- JP-A- 2001 012 445
- JP-A- 2001 208 035
- US-A- 4 133 575
- US-A- 5 318 262
- US-A1- 2002 190 170
- PATENT ABSTRACTS OF JAPAN Bd. 1997, Nr. 10, 31. Oktober 1997 (1997-10-31) -& JP 09 151929 A (KITAMURA NOBUAKI), 10. Juni 1997 (1997-06-10)

## Beschreibung

Die Erfindung bezieht sich auf eine Unterdruck-Haltevorrichtung zum Festlegen von Gegenständen an Befestigungsoberflächen.

Unterdruck-Haltevorrichtungen sind beispielsweise als Saugfußbefestigungen bekannt. Die Saugfüße solcher Saugfußbefestigungen bestehen aus einem elastischen Material, wie Gummi oder Kunststoff. Der technische Effekt solcher Saugfüße besteht darin, dass sich zwischen dem hohlen Innenraum und der Befestigungsoberfläche, an der der Saugfuß zu befestigen ist, beim Ansetzen eine Kammer ausbildet. Die Luft wird aus der Kammer durch ein Andrücken des Saugfußes an die Befestigungsoberfläche herausgepresst; sie entweicht zwischen dem Dichtrand des Saugfußes und der Befestigungsoberfläche. Bei nachlassendem Andruck stellt sich durch die rückfedernde Elastizität des Saugfußes in der Kammer ein Unterdruck ein, der den Saugfuß an der Befestigungsoberfläche festsaugt.

Die bekannten Unterdruck-Haltevorrichtungen zielen auf eine gute Haftung an glatten Befestigungsoberflächen ab. Das Anhaften an weniger glatten, rauen Oberflächen stellt ein Problem dar. Solche weniger glatten Oberflächen sind beispielsweise die mehr oder weniger horizontalen oberen Abdeckungen von Armaturentafeln in Kraftfahrzeugen, das so genannte Armaturenbrett.

Aus der GB 491,991 ist eine Unterdruckhaltevorrichtung bekannt, die einen Deckel aus einem federungsfähigen Material auf einer gummielastischen Saugauflage aufweist. Wenn der Deckel mittig zur Saugauflage hin angedrückt wird, geht die konvexe Deckelform in eine konkave Form über. Mit Nachlassen des Druckes kehrt der Deckel in seine konvexe Form zurück und beabstandet damit die Saugauflagenmitte von der Anlagefläche, so dass sich zwischen Saugnapf und Anlagefläche ein Vakuum ausbildet. Eine derartige Unterdruckhaltevorrichtung unterscheidet sich von der vorliegenden Erfindung dadurch, dass die weiche Saugauflage selbst keine von der Anlagefläche weg gerichtete Kraft nach Nachlassen des Anpressdruckes entfalten kann. Dies kann nachteilig für das Haftvermögen der Unterdruckhaltevorrichtung sein, weil das Ausmaß des Unterdruckes allein durch die Rückstellkraft des Deckels bestimmt wird.

Aus der GB 1,084,559 ist eine Unterdruckhaltevorrichtung mit glockenförmiger Saugauflage und Deckel bekannt, bei der anders als nach der GB 491,991 Saugauflagenmitte und Deckel nicht unverrückbar sondern verschieblich miteinander verbunden sind. Hierzu sitzt ein Schraubenschaft auf einer in die Saugauflage eingebrachten scheibenartigen, steifen Metallplatte auf. Die Metallplatte weist Löcher auf. Die Saugauflagenmitte wird mittels eines auf den Deckel aufgesetzten Kopfes mit Gewindebohrung von der Ablagefläche zum Erzeugen des Vakuums beabstandet. Auch diese Unterdruckhaltevorrichtung weist kein Stabilisierungsgerüst mit Armen auf und die in die Saugauflage eingebrachte steife Metallplatte kann, weil nicht elastisch deformierbar, keine zusätzliche Rückstellkraft in Reaktion auf den nachlassenden Anpressdruck entfalten.

Viele der bekannten Haftsaugvorrichtungen mit Glockenform haben den Nachteil, dass durch die Rückstellkraft des Saugnapfes in Glockenform bei nachlassendem Unterdruck der Winkel zwischen Dichtrand und Auflagefläche größer wird, hieraus eine ungebremste auch radial nach innen gerichtete Rückstellkraft resultiert und die Haftsaugvorrichtung abfällt.

Es ist Aufgabe der Erfindung, eine Unterdruck-Haltevorrichtung zu schaffen, die auch an rauen Befestigungsoberflächen sicher, fest und lang anhaltend haftet.

Die Aufgabe wird erfindungsgemäß gelöst durch eine Unterdruck-Haltevorrichtung zum Festlegen an Befestigungsoberflächen aufweisend die Merkmale des unabhängigen Anspruchs 1 und die Verwendung gemäß Anspruch 18.

Bevorzugte Ausführungsformen sind Gegenstand der Unteransprüche oder nachfolgend beschrieben.

Der Vorteil der Erfindung besteht darin, dass der dem Festlegen dienende Andruck nicht nur vom Zentralstück aus, sondern gezielt auch über die Saugfußwand aufgebracht wird und damit ein besseres Wegdrücken der Luft aus der Unterdruckkammer möglich ist. Dies ist besonders wichtig bei zunehmende Elastizität /Weichheit des Saugfußes. Die Haftfähigkeit ist auf Basis dieser Konstruktion auch an rauen Befestigungsoberflächen erstaunlich gut. Nach dem Festlegen der Unterdruck-Haltevorrichtung halten die Anpressdrucküberträger in Zusammenwirkung mit dem Zentralstück und dem Andruckmittel eine Zugspannung am Zentralstück von der Befestigungsoberfläche weg aufrecht.

Die Anpressdruck-Überträger sind elastisch in der Höhe verformbar und bestehen z.B. aus einem ringförmigen Wulst oder einzelnen ringförmig angeordneten Noppen. Das Andruckmittel, das gegen den Wulst oder die Noppen drückt, besteht aus einem Deckel, der andrückend von außen über die Anpressdruck-Überträger gegen die Wand des Saugfußes wirkt.

Die Wulst oder die Noppen sind wahlweise an der Außenseite des Saugfußes oder an der zum Saugfuß gewandten Seite des den Andruck verstärkenden Deckels vorgesehen. In beiden Fällen wird die gleiche Druckübertragung erzielt.

Die Anpressdruck-Übertrager sind aber bevorzugt integraler Bestandteil der Saugfußwand und weiterhin bevorzugt aus dem selben Material hergestellt. Die Anpressdruck-Überträger können im entspannten Zustand nur mit dem Andruckmittel oder nur mit der Saugfußwand in Verbindung stehen. Bevorzugt stehen diese auch im Ruhezustand der Unterdruckhaltevorrichtung mit dem Andruckmittel und mit der Saugfußwand in Berührung.

Wenn sich der Ring der Anpressdruck-Überträger vom Zentralstück aus gesehen auf einem bestimmten Radius befindet, der z.B. vom Zentralstück aus gesehen etwa von 1/4 bis 5/6, insbesondere von 1/3 bis 2/3, des Vollradiuses des Saugnapfes reicht, dann wirkt sich der Anpressdruck zusätzlich formstabilisierend auf die in sich elastische Wand des Saugfußes aus.

Der Saugfuß und vorzugsweise auch die Anpressdruck-Überträger bestehen insbesondere aus einem Material mit einer Shore-Härte kleiner 18 (jeweils Shore A), z.B. zwischen 10 und 18, vorzugsweise im Bereich von 11 bis 14. Besonders günstig sind Shore-Härten im Umfeld von 12 (d.h. +/- 0,5). So geringe Shore-Härten sorgen dafür, dass sich der Dichtrand an Unebenheiten der Befestigungsfläche gut anpasst und dementsprechend gut abdichtet. Der Dichtrand entspricht der Auflagefläche des Saugfußes auf der Befestigungsoberfläche.

Als besonders gut geeignete Materialien für den Saugfuß haben sich elastische Materialien wie Gummi und insbesondere thermoplastische Elastomere erwiesen. Geeignete Materialien sind z.B. Styrol-Block-Copolymere, Styrol-Block-Terpolymere (Styrol-Ethylen-Butylen-Styrol-Blockpolymere) und Styrol-Dien-Polymere.

Ein sehr weiches Material des Saugfußes hat den Nachteil, dass die Formstabilität darunter leidet. Um dem Saugfuß diese Formstabilität dennoch zu verleihen, ist in das Material des Saugfußes ein Stabilisierungsgerüst, z.B. in Form einer Stabilisierungsspinne, mit von einem Zentralstück ausgehenden Spinnenarmen eingebettet. Die Form der Stabilisierungsspinne bestimmt die Glockenform des Saugnapfes.

Das Stabilisierungsgerüst ist federungsfähig. Die Arme des Stabilisierungsgerüstes sind aber rückfedernd abwinkelbar. Wenn Kunststoff zum Einsatz kommt, dann sollte relativ temperaturstabil sein. Insbesondere handelt es sich um faserverstärkte Polyolefine und insbesondere um glasfaserverstärktes Polypropylen.

Das Stabilisierungsgerüst weist vom Zentralstück ausgehende Armen auf, die ggf. untereinander verbunden sind und zumindest den halben vorzugsweise zumindest dreiviertel des Radius des Saugfußes überstreichen.

Die vom Zentralstück ausgehenden Spinnenarme des Stabilisierungsgerüstes sind nach einer bevorzugten Ausführungsform oben jeweils mit zumindest einem endständigen Abstandshalter versehen, der im wesentlichen allseitig in das weichelastische Material mit der Shore-Härte (nach DIN 53505) kleiner 18 einbettet ist und etwa die Höhe der Beschichtung auf den Spinnearmen hat. Die Abstandshalter erleichtern die Spritzguss-Herstellung des Saugfußes und fixieren die Arme in der Spritzgussform.

Am Dichtrand zur Unterseite des Saugfußes hin sind z.B. drei Dichtlippen vorgesehen, die konzentrisch sind und die sich zum Zentralstück hin auf sich verkleinernden Durchmessern befinden.

Zum Niederdrücken des Wulstes dient ein über den Saugfuß gestülpter Deckel, der mit dem Zentralstück des Saugfußes verbunden ist. Das Andruckmittel bzw. der Deckel können auch Teil des zu befestigenden Gegenstandes bzw. dessen Halterung sein, etwa einer Halterung für ein mobiles Telefon.

Der Deckel besteht aus einem in sich selbst nicht elastischen festen Material und ist vorzugsweise konkav, z.B. als Teilfläche einer Kugeloberfläche, und weiter bevorzugt durch einen mittig auf den Deckel wirkenden Anpressdruck, wie von Fingern ausgeübt, so verformbar, dass die konkave Form sich verflacht und die Deckelmitte mit eine Rückstellkraft in die spannungslose konkave Ursprungsform zurückstrebt.

Der Deckel kann innen am Außenrand Abstandshalter in Form einer oder mehrerer kreisförmiger oder teilkreisförmiger Rippen oder punktförmiger Noppen aufweisen, die sich im angebrachten Zustand gegen die äußere Saugfußwand abstützen und ein Kippeln des Deckels verhindern.

Der Deckel deckt den Saugfuß im wesentlichen vollständig ab. Ggf. kann es gewünscht sein, dass der Saugfuß am äußersten Rand nicht überdeckt wird und eine fugenartige Kante bildet entlang derer gut gewischt werden kann.

Nach Erliegen des Anpressdruckes beabstandet der durch den Anpreßdruck elastisch deformierte konkave Deckel das Zentralstück unter Spannung mit einer Rückstellkraft weiter von der Befestigungsoberfläche.

Der Deckel ist bevorzugt mit dem Zentralstück des Saugfußes durch eine Einrastverbindung unlösbar verbunden

Die Montageeinrichtung für zu haltende Gegenstände weist z.B. eine zentrale Schraubenverbindung auf, die den Deckel mit dem Zentralstück des Saugfußes verbindet und auch der Befestigung von Gegenständen dient.

Um die Ausrichtung mit der Haltevorrichtung befestigter Gegenstände in Hinsicht auf optimale Sichtbarkeit zu ermöglichen, weist die Montageeinrichtung, insbesondere die Schraubverbindung, vorzugsweise ein Kugelgelenk auf, an dem Gegenstände anbringbar sind.

Das Kugelgelenk besteht vorzugsweise aus einer an der Schraubverbindung angeordneten Kugel und einem darauf passenden Kugelkorb, der einen Befestigungsstutzen für Gegenstände trägt. Kugel und Kugelkorb können gegeneinander durch Stellschrauben, z.B. in Form von Madenschrauben fixiert sein. Über den Kugelkorb lässt sich auf einfache Weise die optimale Sichteinstellung erzielen. Die Schraubverbindung kann einen Befestigungsteller aufweisen, mit dem der Deckel auf das Zentralstück des Saugfußes drückbar ist. An dem Befestigungsteller kann ein nicht dargestellter Klettverschluß vorgesehen sein, an dem der Gegenstand mit dem Gegenstück des Klettverschlusses festsetzbar ist. Dies ist eine Variante zum Kugelgelenk.

Kugelgelenk und Klettverschluss verfolgen noch den weiteren sinnvollen Zweck, um im Falle einer Montage unterhalb der Windschutzscheibe auf der oberen Armaturenabdeckung die Möglichkeit zu schaffen, dass die montierten Gegenstände sich im Falle einer Kollision von der Unterdruck-Haltevorrichtung ablösen.

Die Unterdruck-Haltevorrichtung kann auch mit einer Klauenscheibe mit ggf. weiteren Montageeinrichtungen auf dem Deckel aufgedreht versehen sein. Hierzu ist der Deckel im Wesentlichen rund ausgebildet, hat aber etwa gleichmäßig über den Umfang verteilt Randzonen mit geringerem Abstand zum Deckelmittelpunkt und Randzonen mit größerem Abstand zum Deckelmittelpunkt. Die Klauenscheibe wird auf die Randzonen mit geringerem Abstand zum Deckelmittelpunkt gesetzt und durch Drehen in Richtung der Randzonen mit größerem Abstand zum Deckelmittelpunkt durch Eingreifen von Krallen in die weiteren Randzonen des Deckels festlegt.

Um ein Verdrehen der festgesetzten Klauenscheibe zu verhindern, sind Einrastvorrichtungen vorgesehen über die die Klauenscheibe anfänglich drehbar geführt ist, um schließlich in der Verankerungsposition einrastend verdrehsicher festgelegt zu sein.

Im Folgenden wird der Gegenstand der Erfindung anhand der Figuren 1 bis 14 beispielhaft erläutert. Es zeigen:
Fig.1 in Draufsicht den Saugfuß einer Unterdruck-Haltevorrichtung, die auch an rauen Befestigungsoberflächen haften kann,
Fig. 2 den Saugfuß der Unterdruck-Haltevorrichtung nach Fig. 1 in Seitenansicht.
Fig. 3 die Unterdruck-Haltevorrichtung in montiertem Zustand im Schnitt,
Fig. 4 in Draufsicht die in das Material des Saugfußes der Unterdruck-Haltevorrichtung eingebrachte, formstabilisierende Einlage in Form einer Stabilisierungsspinne mit einem Zentralstück und von diesem ausgehende Spinnenarme,
Fig. 5 die Stabilisierungsspinne nach Fig. 4 im Rohzustand in Seitenansicht,
Fig. 6 einen Andruckverstärkerdeckel für die Montage der Unterdruck-Haltevorrichtung,
Fig. 7 eine Montageschraube für die Unterdruck-Haltevorrichtung, mit der diese an einer Befestigungsoberfläche festgelegt wird, in Seitenansicht,
Fig. 8 eine abgewandelte Montageschraube mit einem Kugelgelenk für die Befestigung eines Gegenstandes.
Fig. 9 einen Schnitt durch den Saugfuß und den Deckel. Das Zentralstück weist eine Ausnehmung für ein Einrastelement auf, um Deckel und Zentralstück gegeneinander festzulegen. Stützrillen verhindern ein Kippeln des aufgesetzten Deckels.
Fig. 10 eine dreidimensionale Darstellung der Stabilisierungsspinne mit Abstandshaltern auf den Spinnenarmen und einer Ausnehmung für ein Einrastelement im Zentralstück.

In Figur 11 und 12 sind verschiedene Montageeinrichtungen als Stangenhalterung abgebildet. In Fig. 11 ist die Aufnahme für eine Stange Teil des Deckels und in Figur 12 Teil einer auf den Deckel aufgesetzten Klauenplatte.

Die Figur 13 verdeutlicht wie die Klauenplatte auf die an einer Wand befestigte Unterdruckhaltevorrichtung (A) aufgesetzt wird (B) und in einer für die beiden Haken geeignet ausgerichteten Position durch Drehen über Rastzähne (C) verharrt.

Die Figur 14 zeigt wie ein Doppelhaken auf einen Federklemmschuh aufgesetzt wird und mittel zweier unterer im Schuh einrastender Federwangen fixiert wird. Der Klemmschuh ist durch Rastlöcher in der Platte und entsprechende Noppen unter dem Schuh verdrehsicher gelagert.

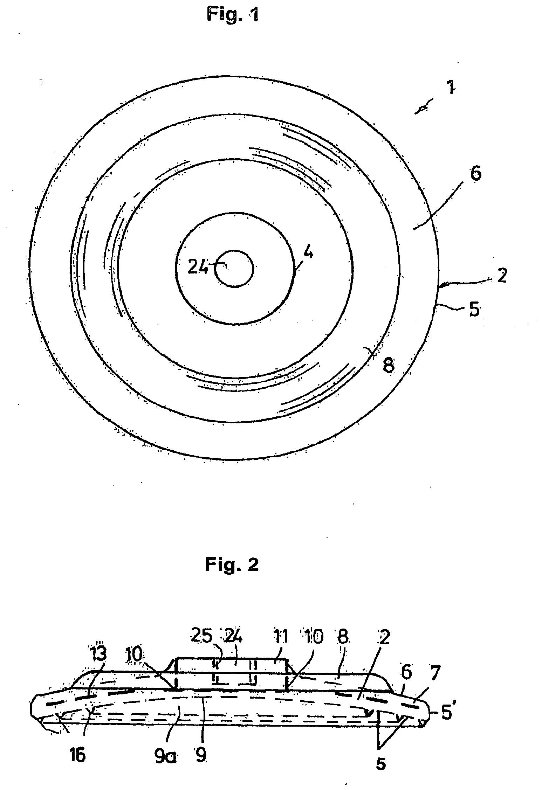

Die Unterdruck-Haltevorrichtung 1 nach den Figuren weist einen Saugfuß 2 auf. In Fig. 1 ist zu erkennen, dass der Saugfuß 2 im Zentrum eine Montageeinrichtung 4 aufweist. Zwischen der Montageeinrichtung 4 und dem Dichtrand 5 des Saugfußes 2 ist an der Außenseite 6 der Saugfußwand 7 ein Anpressdruck-Überträger 8 vorgesehen. Dieser Anpressdruck-Übertrager 8 ist als in der Höhe elastisch verformbarer Ringwulst dargestellt; er kann auch aus einzelnen Noppen bestehen. Die Noppenvariante ist nicht dargestellt.

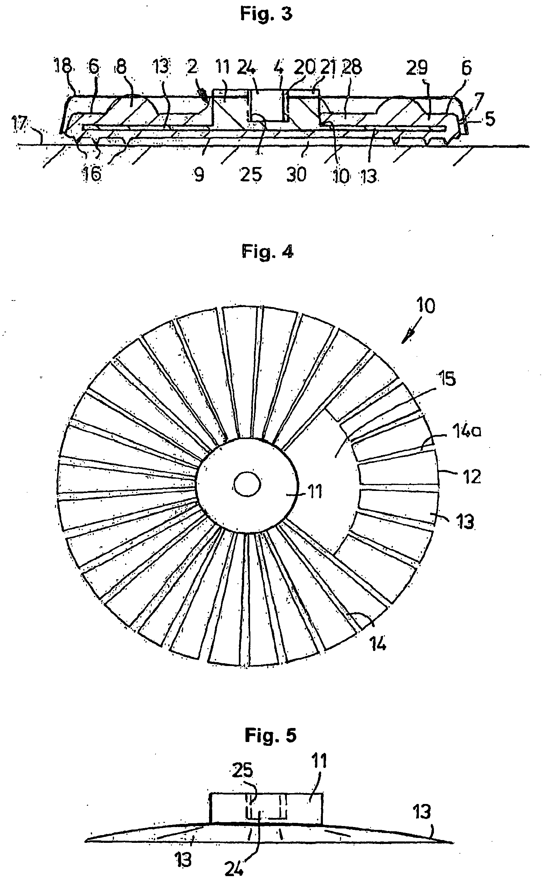

Wie Fig. 2 zeigt, ist der Saugfuß 2 an seiner Unterseite 9 hohl ausgebildet wie eine Glocke. Es ergibt sich dabei eine Unterdruckammer 30. In die Saugfußwand 7 ist ein Stabilisierungsgerüst in Form einer Stabilisierungsspinne 10 eingebettet. Die Stabilisierungsspinne 10 ist in Fig. 4 in Draufsicht dargestellt; sie besteht aus Kunststoff oder Metall. In ihrem Zentrum besteht sie aus einem vorzugsweise zylindrischen Zentralstück 11 und von diesem zum Spinnenrand 12 hin abstehenden Spinnenarmen 13. Die Spinnenarme 13 sind mittels Trennschlitzen 14 voneinander separiert, die sich vom Zentralstück 11 aus bis zum Spinnenrand 12 erstrecken. Es ist aber auch möglich, die Trennschlitze 14 nur etwa ab der Hälfte (14a), ausgehend von einem Vollstück 15, anzubringen, wie in Fig.4 für einige Spinnenarme angedeutet ist.

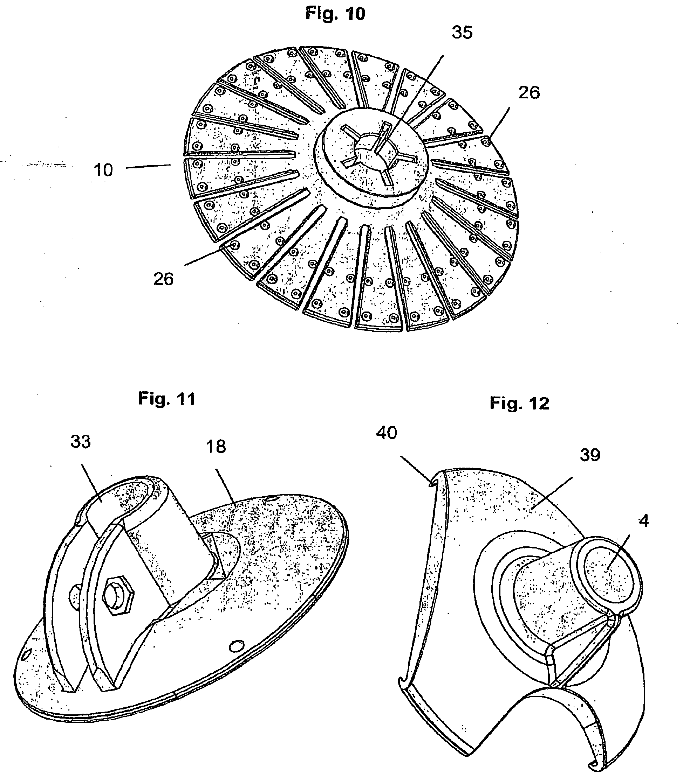

In Fig. 5 ist die Stabilisierungsspinne 10 in Seitenansicht dargestellt. Man erkennt das Zentralstück 11 und die Spinnenarme 13. Die Spinnenarme 13 sind auf und nieder biegbar gegen eine Rückstellkraft in Richtung auf die Ruheposition. Die Stabilisierungsspinne 10 ist ebenfalls in der Fig. 10 dargestellt. In Figur 10 sind zusätzlich Abstandshalter 26 und eine Einrastausnehmung 35 im Zentralstück 11 zu sehen.

Betrachtet man die Fig. 2, dann ist die Stabilisierungsspinne 10 innerhalb des Saugfußes 2 deutlich zu erkennen, weil die Teile 11, 13 nach Fig. 5 mit dickeren Linien gestrichelt dargestellt sind. An der Unterseite 9 des Saugfußes 2 erkennt man drei konzentrische Dichtlippen 16, die nach unten vorstehen und die sich im Bereich des Dichtrandes 5 befinden. Die Dichtlippen 16 verlaufen konzentrisch zum Zentralstück 11 und auf sich zum Zentralstück hin verkleinernden Durchmessern.

Das um die Stabilisierungsspinne 10 gespritzte Material des Saugfußes 2 ist sehr weich. Seine Shore-Härte (Typ A) liegt im Bereich von 10 bis 18, vorzugsweise 11 bis 14, insbesondere im Umfeld von 12. Damit saugt sich der Saugfuß 2 auch an raue Befestigungsoberflächen 17 sehr gut an. Die Formstabilität und die rückfedernde Elastizität des Saugfuß-Körpers wird durch die eingespritzte Stabilisierungsspinne 10 gewährleistet.

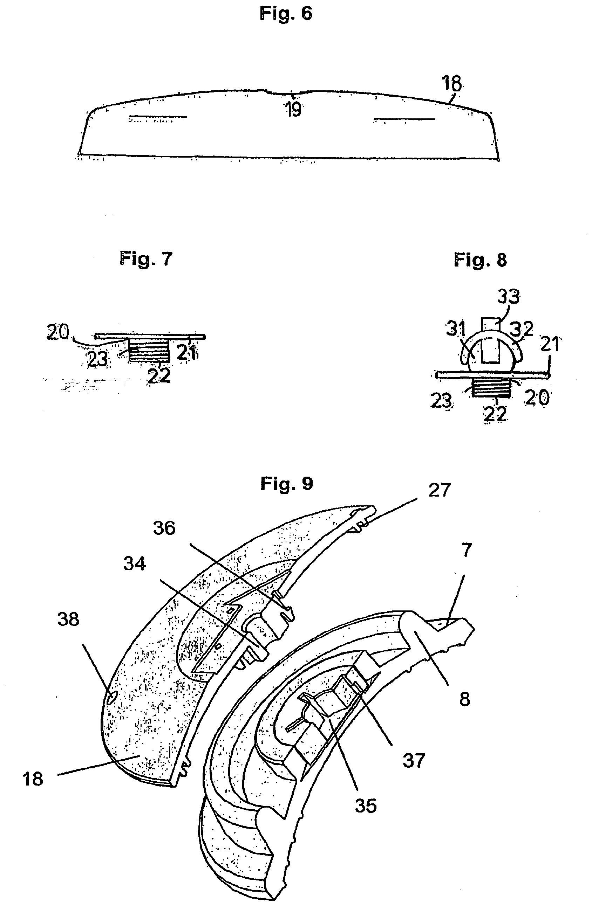

Fig. 6 zeigt einen den Saugfuß 2 vollständig abdeckenden Deckel als Andruckmittel 18. Zur Montage wird durch eine zentrale Öffnung 19 in dem Andruckmittel 18 eine Befestigungsschraube 20 nach Fig. 7 hindurch gesteckt. Diese Befestigungsschraube 20 besteht aus einer Kopfplatte 21 und einem Schraubenschaft 22 mit Außengewinde 23. Eine Innenbohrung 24 des Zentralstückes 11 weist ein Innengewinde 25 auf. Das Andruckmittel 18 wird mit der Befestigungsschraube 20 über den Saugfuß 2 nach Fig. 2 gestülpt. Das Andruckmittel 18 ist nach oben gewölbt und wird mittels der Befestigungsschraube 20 niedergedrückt, damit der Schraubenschaft 22 in das Innengewinde 25 der Innenbohrung 24 des Zentralstückes 11 eingeschraubt werden kann.

Aus Fig. 3 ist zu erkennen, dass die Kopfplatte 21 das Andruckmittel 18 auf das Zentralstück 11 drückt. Der niedergedrückte Mittelteil 28 des Saugfußes ist bestrebt, den Randbereich 29 hochzukippen. Dies verhindert aber der Wulst 8, der den Randbereich 29 niederhält. Die Dichtlippen 16 werden also sicher gegen die Befestigungsoberfläche 17 gedrückt. In der Unterdruckkammer 30, die sich zwischen der Unterseite 9 des Saugfußes 2 und der Befestigungsoberfläche 17 ausbildet, ist ein Unterdruck entstanden, der aber nur so hoch ist, dass Beschädigungen der Befestigungsoberfläche 17 vermieden werden. Darüber hinaus hat die Unterdruckkammer 30 eine sehr flache Ausdehnung.

Fig. 9 zeigt einen Schnitt durch Deckel 18 und Saugfuß 2. Besonders gut sind die Einrastausnehnung 35 mit Widerlager 37 für den Widerhaken 36 der Einrastflansch 34 sowie der Anpressdruckverstärker 8 zu erkennen. Die Einrastnoppen 38 greifen in entsprechende Ausnehmungen einer nicht dargestellten Klauenscheibe 39, wie sie beispielhaft in Fig. 12 dargestellt ist, ein. Damit bei festgesetztem Deckel 18 dieser nicht kippelt, sind Stützrillen 27 vorgesehen, die sich auf die Saugfußwand 7 abstützen. Die Stützrillen 27 können auch als Stütznoppen ausgebildet sein.

An der Unterdruck-Haltervorrichtung lassen sich Gegenstände befestigen. Dies kann entweder mittels der in das Innengewinde 25 eingeschraubten Befestigungsschraube 20 oder eines nicht dargestellten Klettverschlusses erfolgen. Fig. 8 zeigt eine weitere Variante, die aus einer mit der Befestigungsschraube 20 verbundenen Kugel 31 und einem auf die Kugel 31 gestülpten Kugelkorb 32 besteht, der einen Befestigungsstutzen 33 trägt.

In Fig. 11 ist eine mittels einer Maschinenschraube klemmbare Stabhalterung als Montageeinrichtung 4 gezeigt. Der Befestigungsstutzen 33 ist als Stabhülse ausgebildet, unmittelbar auf dem Deckel 18 aufgebracht und weist eine seitliche Stabilisierungsstrebe auf.

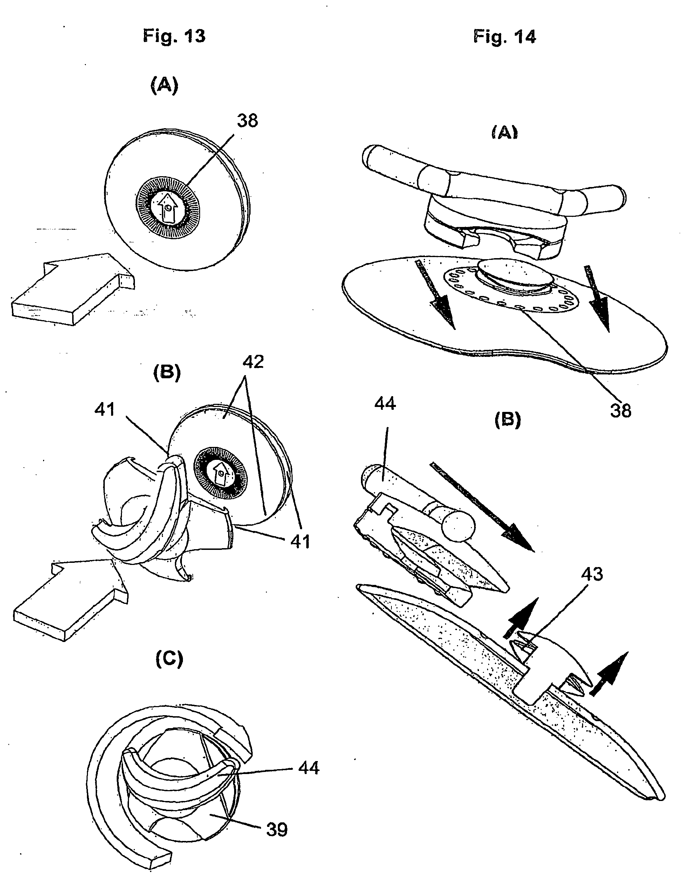

Alternativ kann auf den flachen Deckel 18 auch eine Klauenscheibe 39 aufgesetzt sein. Der nicht völlig runde Deckel weist hierzu drei Ausbuchtungen (Randzonen 42) auf, in denen sich die Krallen 40 der Klauenscheibe 39 durch Drehen festsetzen lassen. Aufgesetzt wird die Klauenscheibe 39, indem die Krallen 40 mit drei korrespondierenden Einbuchtungen (Randzonen 41) gefluchtet werden. Der Vorgang des Festsetzens der Klauenscheibe 39 ist in Figur 13 (Abfolge A bis C) schematisch dargestellt. Der Pfeil auf dem Deckel 18 gibt die Position oben an.

Fig. 14 zeigt, dass die Montageeinrichtung 4 alternativ auch mittels eines um einen Dom mit Federwangen 43 drehbaren Schuhs festgelegt werden kann. Der Doppelhaken 44 wird durch Einrastvorrichtungen 38 gegen Verdrehen gesichert, wenn die Federwangen 43 in einer Versenkung im Inneren des Schuhs nach unten einrasten.

## Patentansprüche

1. Unterdruck-Haltevorrichtung (1) zum Festlegen an Befestigungsoberflächen (17) aufweisend
- einen zur Befestigungsoberfläche (17) offenen, hohlen Saugfuß (2) mit einem Zentralstück (11) und
- einen Dichtrand (5), der zumindest zur Befestigungsoberfläche (17) hin, ein elastisches Material aufweist und mit dem der Saugfuß (2) auf die Befestigungsoberfläche (17) aufsetzbar ist, so dass sich zwischen der Unterseite (9) des Saugfußes (2) und der Befestigungsoberfläche (17), wenn auf diese aufgesetzt, eine nach außen gasdicht abgeschlossene Unterdruckkammer (30) ausbildet,
- die Unterdruck-Haltevorrichtung (1) Anpressdruck-Überträger (8) aufweist, die elastisch in Richtung der Druckachse deformierbar sind und zwischen dem Zentralstück (11) des Saugfußes (2) und dem äußeren Dichtrand (5') am Saugfuß - beabstandet jeweils vom Zentralstück (11) und vom äußeren Dichtrand (5') - auf der Außenseite (6) der Saugfußwand (7) angeordnet sind, und
- die Unterdruck-Haltevorrichtung (1) ein Andruckmittel (18) zur Übertragung des Anpressdruckes auf die Saugfußwand (7) aufweist, wobei das Andruckmittel (18) so ausgestaltet ist, dass es zumindest unter dem Anpressdruck ausgeübt auf das Zentralstück (11) in Richtung auf die Befestigungsoberfläche (17), wenn auf diese aufgesetzt, in Verbindung steht mit dem Zentralstück (11), den Anpressdruck-Überträgern (8) und über die Anpressdruck-Überträger (8) mit der Saugfußwand (7),
- wobei das Andruckmittel (18), das andrückend von außen gegen die Saugfußwand (7) des Saugfußes (2) wirkt, aus einem am Zentralstück (11) befestigten Deckel besteht, der auf die Anpressdruck-Überträger (8) zumindest unter Anpressdruck einwirkt
**dadurch gekennzeichnet, dass**
- ein Stabilisierungsgerüst (10) mit vom Zentralstück (11) ausgehenden Armen (13) in das Material des Saugfußes (2) eingebettet ist und die Arme (13) zumindest den halben Radius des Saugfußes (2) überstreichen und rückfedernd abwinkelbar sind.

2. Unterdruck-Haltevorrichtung gemäß Anspruch 1, **dadurch gekennzeichnet, dass** die Anpressdruck-Überträger (8) aus einem im wesentlichen ringförmigen Wulst oder einzelnen Noppen bestehen, die unabhängig vorzugsweise im wesentlichen konzentrisch zum Zentralstück (11) angeordnet sind.

3. Unterdruck-Haltevorrichtung gemäß einem der vorhergehenden Ansprüche, **dadurch gekennzeichnet, dass** die Anpressdruck-Überträger (8) aus einem gummielastischen Material bestehen, insbesondere mit einer Shore-Härte (nach DIN 53505) von kleiner 18, vorzugsweise zwischen 10 und 18, und unabhängig hiervon die Anpressdruck-Überträager (8) vorzugsweise integraler Teil der Außenseite (6) der Saugfußwand (7) sind und aus dem selben Material bestehen.

4. Unterdruck-Haltevorrichtung gemäß einem der vorhergehenden Ansprüche, **dadurch gekennzeichnet, dass** das Andruckmittel (18) eine konkave Form hat, die weiter bevorzugt durch Krafteinwirkung mittig elastisch in Richtung des Zentrums deformierbar ist.

5. Unterdruck-Haltevorrichtung gemäß einem der vorhergehenden Ansprüche, **dadurch gekennzeichnet, dass** der Deckel den Saugfuß (2) im wesentlichen überdeckt.

6. Unterdruck-Haltevorrichtung gemäß einem der vorhergehenden Ansprüche, **dadurch gekennzeichnet, dass** das Andruckmittel (18) nach Erliegen des äußeren Anpressdruckes das Zentralstück (11) unter Spannung mit einer Rückstellkraft von der Befestigungsoberfläche (17), wenn auf diese aufgesetzt, zusätzlich beabstandet, vorzugsweise auch verursacht durch das zuvor erfolgte elastische Deformieren des Andruckmittels (18) in der Andruckmittelmitte durch den Anpressdruck.

7. Unterdruck-Haltevorrichtung gemäß einem der vorhergehenden Ansprüche, **dadurch gekennzeichnet, dass** die Anpressdruck-Überträger (8) wahlweise an der Außenseite (6) des Saugfußes (2) oder an der zum Saugfuß (2) gewandten Seite des Andruckmittels (18) vorgesehen sind bzw. ein Teil derselben bilden.

8. Unterdruck-Haltevorrichtung gemäß einem der vorhergehenden Ansprüche, **dadurch gekennzeichnet, dass** der Saugfuß (2) zumindest im Bereich des Dichtrandes (5), vorzugsweise auch im Bereich der Saugfußwand (7) und ggf. der ganze Saugfuß (2), für diesen Fall abgesehen vom Zentralstück (11), aus einem Material mit einer Shore-Härte (nach DIN 53505) kleiner 18, vorzugsweise zwischen 10 und 18 und insbesondere von 11 und 14 besteht.

9. Unterdruck-Haltevorrichtung gemäß einem der vorhergehenden Ansprüche, **dadurch gekennzeichnet, dass** der Saugfuß (2) aus einem thermoplastischen Elastomer besteht bzw. dieses aufweist.

10. Unterdruck-Haltevorrichtung gemäß einem der vorhergehenden Ansprüche, **dadurch gekennzeichnet, dass** die Arme (13) des Stabilisierungsgerüstes zumindest dreiviertel des Radius des Saugfußes überstreichen.

11. Unterdruck-Haltevorrichtung gemäß Anspruch 10, **dadurch gekennzeichnet**, das-s das Stabilisierungsgerüst (10) aus einem federungsfähigen Material besteht.

12. Unterdruck-Haltevorrichtung gemäß Anspruch 10 oder 11, **dadurch gekennzeichnet, dass** das Stabilisierungsgerüst(10) eine Glockenform aufweist, insbesondere in flacher Kreiskegelform.

13. Unterdruck-Haltevorrichtung gemäß einem der vorhergehenden Ansprüche, **dadurch gekennzeichnet, dass** die vom Zentralstück(11) ausgehenden Arme (13) des Stabilisierungsgerüstes (10) oben, d.h. von der Befestigungsfläche (17) weg, wenn auf diese aufgesetzt, jeweils mit zumindest einem Abstandshalter (26) versehen sind, der im Wesentlichen allseitig in das weichelastische Material mit der Shore-Härte (nach DIN 53505) kleiner 18 eingebettet ist, der Abstandhalter etwa die Höhe der Beschichtung auf den Armen (13) hat und insbesondere ab der Mitte der Arme auf dem äußeren Rand der Arme (13) angeordnet ist.

14. Unterdruck-Haltevorrichtung gemäß einem der vorhergehenden Ansprüche, **dadurch gekennzeichnet, dass** die Anpressdruck-Überträger (8) vom Zentralstück (11) aus gesehen in einem Radiusbereich angeordnet sind, der von 1/4 bis 5/6, insbesondere von 1/3 bis 2/3, des Vollradius des Saugnapfes reicht.

15. Unterdruck-Haltevorrichtung gemäß einem der vorhergehenden Ansprüche, **dadurch gekennzeichnet, dass** am Dichtrand (5) auf der Unterseite (9) des Saugfußes ein, zwei oder drei umlaufende Dichtlippen (16) vorgesehen sind, die vorzugsweise konzentrisch sind, und weiter bevorzugt der Abstand von der äußeren Dichtlippe zur nächsten weiter innen liegenden zweiten Dichtlippe kleiner ist als der Abstand der zweiten Dichtlippe zur dritten Dichtlippe.

16. Unterdruck-Haltevorrichtung gemäß einem der vorhergehenden Ansprüche, **dadurch gekennzeichnet, dass** das Andruckmittel (18) mit dem Zentralstück (11) des Saugfußes (2) lösbar verbunden ist.

17. Unterdruck-Haltevorrichtung gemäß einem der vorhergehenden Ansprüche, **dadurch gekennzeichnet, dass** eine Montageeinrichtung (4) das Andruckmittel (18) und den Saugfuß lösbar verbindet und die Montageeinrichtung (4) vorzugsweise eine zentrale Schraubenverbindung (20) aufweist, die das Andruckmittel (18) mit dem Zentralstück (11) des Saugfußes (2) verbindet und/oder eine Befestigungsvorrichtung für Gegenstände aufnimmt.

18. Verwendung eines Saugfußes (2) und eines Andruckmittels (18) als Bauteile einer Unterdruck-Haltevorrichtung (1) zum Festlegen an Befestigungsoberflächen (17), wobbei der Saugfuss (2) zur Befestigungsoberfläche (17) offen und hohl ist, mit einem Zentralstück (11) und einen Dichtrand (5), wobei der Saugfuß (2) zumindest zur Befestigungsoberfläche (17) hin, wenn auf diese aufgesetzt, ein elastisches Material aufweist mit dem der Saugfuß (2) auf die Befestigungsoberfläche (17) aufsetzbar ist, so dass sich zwischen der Unterseite (9) des Saugfußes und der Befestigungsoberfläche (17), wenn auf diese aufgesetzt, eine nach außen gasdicht abgeschlossene Unterdruckkammer (30) ausbildet, die Unterdruck-Haltevorrichtung (1) Anpressdruck-Überträger (8) aufweist, die elastisch in Richtung der Drückachse deformierbar sind und auf der Außenseite (6) der Saugfußwand (7) angeordnet sind, und in das elastische Material des Saugfußes (2) ein federungsfähiges Stabilisierungsgerüst (10) in Form einer Stabilisierungsspinne mit vom Zentralstück (11) ausgehenden Armen (13) eingebettet ist,
wobei das Andruckmittel (18), das andrückend von außen gegen die Saugfußwand (7) des Saugfußes (2) wirkt, aus einem am Zentral stück (11) befestigten Deckel besteht, der auf die Anpressdruck-Überträger (8) zumindest unter Anpressdruck einwirkt, und wobei die Unterdruck-Haltevorrichtung (1) das Andruckmittel (18) zur Übertragung des Anpressdruckes auf die Saugfußwand (7) aufweist, wobei das Andruckmittel (18) so ausgestaltet ist, dass es zumindest unter dem Anpressdruck ausgeübt auf das Zentralstück (11) in Richtung auf die Befestigungsoberfläche (17) in Verbindung steht mit dem Zentralstück (11), den Anpressdruck-Überträgern (8) und über die Anpressdruck-Überträger (8) mit der Saugfußwand (7), und
wobei die Arme (13) und/oder das elastische Material des Saugfußes (2) weiter durch eines oder beide der Merkmale a) und/oder b) wie folgt gekennzeichnet sind:
a) die Arme (13) überstreichen zumindest den halben Radius des Saugfußes (2), wobei das elastische Material des Saugfußes (2) eine Shore-Härte kleiner 18 aufweist,
b) die Arme (13) des Stabilisierungsgerüstes (10) sind nach oben, d.h. von der Befestigungsfläche (17) weg, wenn auf diese aufgesetzt, jeweils mit zumindest einem Abstandshalter (26) versehen, der im Wesentlichen allseitig in das weichelastische Material des Saugfußes (2) mit der Shore-Härte (nach DIN 53505) kleiner 18 eingebettet ist und etwa die Höhe der Beschichtung auf den Armen (13) hat.

19. Verwendung gemäß Anspruch 18, **dadurch gekennzeichnet, dass** die Arme (13), untereinander verbunden sind.

20. Verwendung gemäß zumindest einem der Ansprüche 18 und 19, **dadurch gekennzeichnet, dass** die Arme des Stabilisierungsgerüstes rückfedernd abwinkelbar sind.

21. Verwendung gemäß Anspruch 18, **dadurch gekennzeichnet, dass** der Saugfuß (2) Anpressdruck-Überträger (8) aufweist, die integraler Bestandteil der Saugfußwand sind.

22. Verwendung gemäß Anspruch 18, **dadurch gekennzeichnet, dass** der Saugfuß (2) eine Glockenform hat.

23. Verwendung-gemäß Anspruch 18, **dadurch gekennzeichnet, dass** die Arme (13) zumindest dreiviertel des Radius des Saugfußes (2) überstreichen.

## Claims

1. A suction-type holding device (1) for fixing on fastening surfaces (17), comprising
- a hollow suction base (2) which is open towards the fastening surface (17) and is provided with a central piece (11) and
- a sealing edge (5) which comprises an elastic material at least towards the fastening surface (17) and with which the suction base (2) is placeable on the fastening surface (17) so that an outwardly gas-tight sealed suction chamber (30) is formed between the underside (9) of the suction base (2) and the fastening surface (17), when placed thereon,
- the suction-type holding device (1) comprises contact pressure transmitters (8) which are elastically deformable in the direction of the pressure axis and are located between the central piece (11) of the suction base (2) and the outer sealing edge (5') on the suction base - at a distance from the central piece (11) and from the outer sealing edge (5') in each case - on the outer side (6) of the suction base wall (7), and
- the suction-type holding device (1) comprises a pressing means (18) for transferring the contact pressure to the suction base wall (7), wherein the pressing means (18) is configured in such a manner that at least under the contact pressure exerted on the central piece (11) in the direction of the fastening surface (17), when placed thereon, said means is in communication with the central piece (11), the contact pressure transmitter(s) (8) and via said contact pressure transmitter(s) (8), with the suction base wall (7),
- wherein the pressing means (18) which is formed to be able to put pressure from outside against the suction base wall (7) of the suction base (2), comprises of a cover secured to the central piece (11), which acts on the contact pressure transmitter(s) (8) at least under contact pressure,
**characterised in that**
- a stabilising framework (10) with arms (13) emanating from the central piece (11) is embedded in the material of the suction base (2) and the arms (13) cover at least half the radius of the suction base (2) and are resiliently bendable.

2. The suction-type holding device according to claim 1, **characterised in that** the contact pressure transmitters (8) consist of a substantially annular bead or individual knobs which are arranged independently preferably substantially concentrically to the central piece (11).

3. The suction-type holding device according to any one of the preceding claims, **characterised in that** the contact pressure transmitters (8) consist of a rubber-elastic material, in particular having a Shore hardness (according to DIN 53505) of less than 18, preferably between 10 and 18, and independently thereof, the contact pressure transmitters (8) are preferably an integral part of the outer side (6) of the suction base wall (7) and consist of the same material.

4. The suction-type holding device according to any one of the preceding claims, **characterised in that** the pressing means (18) have a concave shape which more preferably is deformable by the action of force centrally elastically in the direction of the centre.

5. The suction-type holding device according to any one of the preceding claims, **characterised in that** the cover substantially covers the suction base (2).

6. The suction-type holding device according to any one of the preceding claims, **characterised in that** after yielding to the external contact pressure, the pressing means (18) additionally moves the central piece (11) under tension away from the fastening surface (17), when placed thereon, with a restoring force, preferably also caused by the elastic deformation of the pressing means (18) at the centre of the cover previously effected by the contact pressure.

7. The suction-type holding device according to any one of the preceding claims, **characterised in that** the contact pressure transmitters (8) are provided as desired on the outer side (6) of the suction base (2) or on the side of the pressing means (18) facing the suction base (2) or form part thereof.

8. The suction-type holding device according to any one of the preceding claims, **characterised in that** the suction base (2), at least in the area of the sealing edge (5), preferably also in the area of the suction base wall (7) and optionally the entire suction base (2), apart from the central piece (11) for this case, consists of a material having a Shore hardness (according to DIN 53505) of less than 18, preferably between 10 and 18 and in particular of 11 and 14.

9. The suction-type holding device according to any one of the preceding claims, **characterised in that** the suction base (2) consists of a thermoplastic elastomer or comprises this.

10. The suction-type holding device according to any one of the preceding claims, **characterised in that** the arms of the stabilising framework (10) cover at least three quarters of the radius of the suction base.

11. The suction-type holding device according to claim 10, **characterised in that** the stabilising framework (10) consists of a springy material.

12. The suction-type holding device according to claim 10 or 11, **characterised in that** the stabilising framework has a bell shape, in particular in a flat circular cone shape.

13. The suction-type holding device according to any one of the preceding claims, **characterised in that** the arms (13) of the stabilising framework (10) emanating from the central piece (11) are provided at the top, which means away from the fastening surface when placed thereon, with at least one spacer (26) in each case, which is substantially embedded on all sides in the soft-elastic material having a Shore hardness (according to DIN 53505) of less than 18, said spacer approximately has the height of the coating on the arms (13) and in particular is arranged from the centre of the arms onwards on the outer edge of the arms (13).

14. The suction-type holding device according to any one of the preceding claims, **characterised in that** the contact pressure transmitters (8) when viewed from the central piece (11) are arranged in a radial region which extends from 1/4 to 5/6, in particular from 1/3 to 2/3 of the total radius of the suction cup.

15. The suction-type holding device according to any one of the preceding claims, **characterised in that** one, two or three circumferential sealing lips (16) are provided on the sealing edge (5) on the underside (9) of the suction base, said sealing lips preferably being concentric and more preferably the distance from the outer sealing lip to the next second sealing lip located further inwards being smaller than the distance of the second sealing lip from the third sealing lip.

16. The suction-type holding device according to any one of the preceding claims, **characterised in that** the pressing means (18) is detachably connected to the central piece (11) of the suction base (2).

17. The suction-type holding device according to any one of the preceding claims, **characterised in that** a mounting device (4) detachably connects the pressing means (18) and the suction base and the mounting device (4) preferably has a central screw connection (20) which connects the pressing means (18) to the central piece (11) of the suction base (2) and/or receives a fixing device for objects.

18. Use of a suction base (2) and of a pressing means (18) as components of a suction-type holding device (1) for fixing on fastening surfaces (17), wherein the suction base (2) is open towards the fastening surface (17) and is hollow and is provided with a central piece (11) and a sealing edge (5), wherein said suction base (2) comprises an elastic material at least towards the fastening surface (17). when placed thereon, with which the suction base (2) is placeable on the fastening surface (17) so that, when placed thereon, an outwardly gas-tight sealed suction chamber (30) is formed between the underside (9) of the suction base and the fastening surface (17), the suction-type holding device (1) comprises contact pressure transmitters (8) which are elastically deformable in the direction of the pressure axis and are placed on the outer side (6) of the suction base wall (7), and a springy stabilising framework (10) in the form of a stabilising spider with arms (13) emanating from the central piece (11) is embedded in the elastic material of the suction base (2),
wherein the pressing means (18), which puts pressure from outside against the suction base wall (7) of the suction base (2), consist of a cover secured to the central piece (11), which acts on the contact pressure transmitters (8) at least under contact pressure, and
wherein the suction-type holding device (1) comprises the pressing means (18) for transferring the contact pressure to the suction base wall (7), wherein the pressing means (18) is configured in such a manner that at least under the contact pressure exerted on the central piece (11) in the direction of the fastening surface (17) it is in communication with the central piece (11), the contact pressure transmitters (8) and via the contact pressure transmitters (8) with the suction base wall (7), and
wherein the arms (13) and the elastic material of the suction base (2) are further characterized as follows by one or both of the features a) and/or b):
a) the arms (13) cover at least half of the radius of the suction base (2), wherein the elastic material of the suction base (2) has a Shore hardness of less than 18,
b) the arms (13) of the stabilising framework (10) are provided at the top, which means away from the fastening surface (17), when placed thereon, with one terminal spacer (26) in each case, which is embedded substantially on all sides in the soft-elastic material of the suction base (2) having a Shore hardness (according to DIN 53505) of less than 18 and approximately has the height of the coating on the arms (13).

19. Use according to claim 18, **characterised in that** the arms (13) are interconnected.

20. Use according to at least one of claims 18 and 19, **characterised in that** the arms of the stabilising framework are resiliently bendable.

21. Use according to claim 18, characterised the suction base (2) comprises contact pressure transmitters (8) which form an integral part of the suction base wall.

22. Use according to claim 18, **characterised in that** the suction base (2) has a bell shape.

23. Use according to claim 18, **characterised in that** the arms (13) cover at least three quarters of the radius of the suction base (2).

## Revendications

1. Dispositif de maintien par dépression (1), destiné à la fixation sur des surfaces de fixation (17), comprenant
- une ventouse (2) creuse et ouverte vers la surface de fixation (17), comprenant une pièce centrale (11) et
- un bord d'étanchéité (5) qui comprend, au moins en direction de la surface de fixation (17), une matière élastique et avec laquelle la ventouse (2) peut être placée sur la surface de fixation (17) si bien qu'il se forme entre la face inférieure (9) de la ventouse (2) et la surface de fixation (17), une fois placée sur cette dernière, une chambre de dépression (30) fermée de manière étanche aux gaz vis-à-vis de l'extérieur,
- le dispositif de maintien par dépression (1) présente des organes de transfert de la pression d'application (8) qui sont déformables élastiquement en direction de l'axe de pression et sont disposés entre la pièce centrale (11) de la ventouse (2) et le bord d'étanchéité extérieur (5') sur la ventouse - à une certaine distance respectivement de la pièce centrale (11) et du bord d'étanchéité extérieur (5') - sur la face extérieure (6) de la paroi (7) de la ventouse, et
- le dispositif de maintien par dépression (1) présente un moyen de pression (18) pour le transfert de la pression d'application sur la paroi (7) de la ventouse, où le moyen de pression (18) est conçu de manière à être en relation avec la pièce centrale (11), les organes de transfert de la pression d'application (8) et la paroi (7) de la ventouse, par le biais des organes de transfert de la pression d'application (8), au moins sous la pression d'application exercée sur la pièce centrale (11) en direction de la surface de fixation (17), une fois placée sur cette dernière,
- où le moyen de pression (18), qui agit par pression depuis l'extérieur sur la paroi (7) de la ventouse (2), se compose d'un couvercle fixé sur la pièce centrale (11), qui agit sur les organes de transfert de la pression d'application (8) au moins sous la pression d'application,
**caractérisé en ce que**
- une structure de stabilisation (10) comprenant des bras (13) partant depuis la pièce centrale (11) est incorporée à la matière de la ventouse (2) et les bras (13) recouvrent au moins la moitié du rayon de la ventouse (2) et sont pliables par retour élastique.

2. Dispositif de maintien par dépression selon la revendication 1, **caractérisé en ce que** les organes de transfert de la pression d'application (8) se composent d'un bourrelet essentiellement circulaire ou de noppes individuelles qui sont disposées indépendamment les unes des autres, de préférence essentiellement concentriquement par rapport à la pièce centrale (11).

3. Dispositif de maintien par dépression selon l'une quelconque des revendications précédentes, **caractérisé en ce que** les organes de transfert de la pression d'application (8) se composent d'une matière élastique caoutchouteuse, ayant en particulier une dureté Shore (d'après DIN 53505) inférieure à 18, de préférence située entre 10 et 18, et indépendamment de cela, les organes de transfert de la pression d'application (8) font de préférence partie intégrante de la face extérieure (6) de la paroi (7) de la ventouse et se composent du même matériau.

4. Dispositif de maintien par dépression selon l'une quelconque des revendications précédentes, **caractérisé en ce que** le moyen de pression (18) a une forme concave qui est déformable élastiquement en direction du centre plus préférentiellement sous l'action d'une force médiane.

5. Dispositif de maintien par dépression selon l'une quelconque des revendications précédentes, **caractérisé en ce que** le couvercle recouvre essentiellement la ventouse (2).

6. Dispositif de maintien par dépression selon l'une quelconque des revendications précédentes, **caractérisé en ce que**, après cessation de la pression d'application externe, le moyen de pression (18) écarte encore plus la pièce centrale (11), sous tension avec une force de rappel, de la surface de fixation (17), une fois placée sur cette dernière, de préférence également du fait de la déformation élastique du moyen de pression d'application (18) produite auparavant au milieu du moyen de pression grâce à la pression d'application.

7. Dispositif de maintien par dépression selon l'une quelconque des revendications précédentes, **caractérisé en ce que** les organes de transfert de la pression d'application (8) sont prévus au choix sur la face extérieure (6) de la ventouse (2) ou sur la face du moyen de pression (18) tournée vers la ventouse (2) ou forment une partie de celle-ci.

8. Dispositif de maintien par dépression selon l'une quelconque des revendications précédentes, **caractérisé en ce que** la ventouse (2) se compose, au moins dans la zone du bord d'étanchéité (5), de préférence également dans la zone de la paroi (7) de la ventouse et le cas échéant sur la totalité de la ventouse (2), dans ce cas, abstraction faite de la pièce centrale (11), d'une matière ayant une dureté Shore (d'après DIN 53505) inférieure à 18, de préférence située entre 10 et 18 et notamment entre 11 et 14.

9. Dispositif de maintien par dépression selon l'une quelconque des revendications précédentes, **caractérisé en ce que** la ventouse (2) se compose d'un élastomère thermoplastique ou comprend celui-ci.

10. Dispositif de maintien par dépression selon l'une quelconque des revendications précédentes, **caractérisé en ce que** les bras (13) de la structure de stabilisation recouvrent au moins les trois quarts du rayon de la ventouse.

11. Dispositif de maintien par dépression selon la revendication 10, **caractérisé en ce que** la structure de stabilisation (10) se compose d'un matériau résilient.

12. Dispositif de maintien par dépression selon la revendication 10 ou 11, **caractérisé en ce que** la structure de stabilisation (10) présente une forme de cloche, en particulier de forme circulaire conique aplatie.

13. Dispositif de maintien par dépression selon l'une quelconque des revendications précédentes, **caractérisé en ce que** les bras (13) de la structure de stabilisation (10) partant de la pièce centrale (11) sont pourvus vers le haut, c'est-à-dire en partant de la surface de fixation (17), une fois placée sur cette dernière, respectivement d'au moins un écarteur (26), qui est incorporé sensiblement de tous les côtés dans la matière élastique souple d'une dureté Shore (d'après DIN 53505) inférieure à 18, l'écarteur a environ la hauteur du revêtement sur les bras (13) et est disposé en particulier à partir du milieu des bras sur le bord extérieur des bras (13).

14. Dispositif de maintien par dépression selon l'une quelconque des revendications précédentes, **caractérisé en ce que** les organes de transfert de la pression d'application (8) sont disposés dans une zone du rayon, vue depuis la pièce centrale (11), qui va de 1/4 à 5/6, en particulier de 1/3 à 2/3 du rayon total de la ventouse.

15. Dispositif de maintien par dépression selon l'une quelconque des revendications précédentes, **caractérisé en ce que**, sur le bord d'étanchéité (5) sur la face inférieure (9) de la ventouse, une, deux ou trois lèvres d'étanchéité circulaires (16) sont prévues, qui sont de préférence concentriques, et encore plus préférentiellement la distance entre la lèvre d'étanchéité extérieure et la deuxième lèvre d'étanchéité suivante située plus à l'intérieur est inférieure à la distance entre la deuxième lèvre d'étanchéité et la troisième lèvre d'étanchéité.

16. Dispositif de maintien par dépression selon l'une quelconque des revendications précédentes, **caractérisé en ce que** le moyen de pression (18) est relié de manière amovible à la pièce centrale (11) de la ventouse (2).

17. Dispositif de maintien par dépression selon l'une quelconque des revendications précédentes, **caractérisé en ce qu'**un système de montage (4) relie le moyen de pression (18) et la ventouse de manière amovible et le système de montage (4) présente de préférence un boulonnage central (20) qui relie le moyen de pression (18) avec la pièce centrale (11) de la ventouse (2) et/ou abrite un dispositif de fixation pour des objets.

18. Utilisation d'une ventouse (2) et d'un moyen de pression (18) comme composants d'un dispositif de maintien par dépression (1) pour la fixation sur des surfaces de fixation (17), où la ventouse (2) est creuse et ouverte vers la surface de fixation (17), comprenant une pièce centrale (11) et un bord d'étanchéité (5), où la ventouse (2) présente au moins en direction de la surface de fixation (17), une fois placée sur cette dernière, une matière élastique avec laquelle la ventouse (2) peut être placée sur la surface de fixation (17) de manière à former entre la face inférieure (9) de la ventouse et la surface de fixation (17), une fois placée sur cette dernière, une chambre de dépression (30) fermée de manière étanche aux gaz vis-à-vis de l'extérieur, le dispositif de maintien par dépression (1) présente des organes de transfert de la pression d'application (8) qui sont déformables élastiquement en direction de l'axe de la pression et sont disposés sur la face extérieure (6) de la paroi (7) de la ventouse, et une structure de stabilisation (10) résiliente, prenant la forme d'une toile de stabilisation avec des bras (13) partant de la pièce centrale (11), est incorporée dans la matière élastique de la ventouse (2), où le moyen de pression (18), qui agit par pression depuis l'extérieur sur la paroi (7) de la ventouse (2), se compose d'un couvercle fixé sur la pièce centrale (11), qui agit sur les organes de transfert de la pression d'application (8) au moins sous la pression d'application, et où le dispositif de maintien par dépression (1) présente le moyen de pression (18) pour le transfert de la pression d'application sur la paroi (7) de la ventouse, où le moyen de pression (18) est conçu de manière à être, au moins sous la pression d'application exercée sur la pièce centrale (11) en direction de la surface de fixation (17) en relation avec la pièce centrale (11), les organes de transfert de la pression d'application (8) et par le biais des organes de transfert de la pression d'application (8) avec la paroi (7) de la ventouse, et
où les bras (13) et/ou la matière élastique de la ventouse (2) sont en outre **caractérisés par** une ou deux des caractéristiques a) et/ou b) suivantes :
a) les bras (13) recouvrent au moins la moitié du rayon de la ventouse (2), la matière élastique de la ventouse (2) présentant une dureté Shore inférieure à 18,
b) les bras (13) de la structure de stabilisation (10) sont pourvus vers le haut, c'est-à-dire en partant de la surface de fixation (17), une fois placée sur cette dernière, respectivement d'au moins un écarteur (26) qui est incorporé essentiellement de tous les côtés dans la matière élastique caoutchouteuse de la ventouse (2) ayant la dureté Shore (d'après DIN 53505) inférieure à 18 et qui a environ la hauteur du revêtement sur les bras (13).

19. Utilisation selon la revendication 18, **caractérisée en ce que** les bras (13) sont reliés les uns avec les autres.

20. Utilisation selon au moins l'une des revendications 18 et 19, **caractérisée en ce que** les bras de la structure de stabilisation sont pliables par retour élastique.

21. Utilisation selon la revendication 18, **caractérisée en ce que** la ventouse (2) présente des organes de transfert de la pression d'application (8) qui font partie intégrante de la paroi de la ventouse.

22. Utilisation selon la revendication 18, **caractérisée en ce que** la ventouse (2) a une forme de cloche.

23. Utilisation selon la revendication 18, **caractérisée en ce que** les bras (13) recouvrent au moins les trois quarts du rayon de la ventouse (2).
